# EUROPEAN PATENT SPECIFICATION

(11) **EP 4 326 538 B1**
(45) Date of publication and mention of the grant of the patent: **24.06.2026**
(21) Application number: 22724096.7
(22) Date of filing: 21.04.2022
(51) Int. Cl.: B29C 70/54, B29C 33/68, B29C 37/00, B29C 33/58

(54) **USE OF FLUOROPOLYMER FILM AS RELEASE FILM IN A METHOD FOR SHAPING COMPOSITE MATERIAL**
VERWENDUNG EINER FLUORPOLYMERFOLIE ALS TRENNFOLIE IN EINEM VERFAHREN ZUR FORMUNG EINES VERBUNDSTOFFMATERIALS
UTILISATION DE FILM DE FLUOROPOLYMÈRE COMME FILM DÉTACHABLE DANS UN PROCÉDÉ DE MISE EN FORME D'UN MATÉRIAU COMPOSITE

(30) Priority: 23.04.2021 EP 21170321
(43) Date of publication of application: 28.02.2024
(73) Proprietor: SYENSQO SA, 1130 Brussels (BE)
(72) Inventor: KEY, Ross, Nottingham NG10 1JW (GB); GOFFIN, Anne-Lise, 7804 Rebaix (BE)
(74) Representative: Benvenuti, Federica
(86) International application number: PCT/EP2022/060618
(87) International publication number: WO 2022/223731

(56) References cited:
- EP-A1- 0 017 452
- WO-A1-2010/055404
- JP-A- 2012 218 257
- US-A- 3 042 574
- US-A1- 2018 147 778
- "Norton® ETFE Fluoropolymer Film", 1 January 2002 (2002-01-01), pages 1 - 2, Retrieved from the Internet <URL:https://pronatindustries.com/wp-content/uploads/2015/03/Norton-ETFE.pdf> [retrieved on 20260203]

## Description

Fiber-reinforced polymer composite materials have widespread use in many industries (including aerospace, automotive, marine, industrial, construction, and a wide variety of consumer products), often being preferred because they are lightweight while still exhibiting high strength and corrosion resistance, particularly in harsh environments. Fiber-reinforced polymer composite materials are typically made from either pre-impregnated materials or from resin infusion processes.

Pre-impregnated materials, or "prepregs" generally refer to fibers (such as carbon fibers) impregnated with a curable matrix resin (such as epoxy). The resin content in the prepreg is relatively high, typically 40%-65% by volume. Multiple plies of prepregs may be cut to size for laying up, then subsequently assembled and shaped in a molding tool. In the case where the prepreg cannot be easily adapted to the shape of the molding tool, heating may be applied to the prepreg in order to gradually deform it to the shape of the molding surface. Fiber-reinforced polymer composite materials may also be made by liquid molding processes that involve resin infusion technologies. In a typical resin infusion process, dry bindered fibers are arranged in a mold as a preform, followed by injection or infusion directly *in-situ* with liquid matrix resin. After injection or infusion, the resin-infused preform is cured to provide a finished composite article.

For both types of material, the process for three-dimensional shaping (or molding) of the composite material is critical to the appearance, properties and performance of the final molded product. It is still customary to shape preforms into detailed geometries using a hand layup process, which is time consuming and often results in significant part-to-part variation. While other, less manual, methods also exist for shaping composite materials (such as vacuum forming methods which may also employ pins, robots and/or actuators to aid in part formation), such methods have their own disadvantages and shortcomings. In addition, such methods are often time consuming and do not take the rheological behavior and cure characteristics of the composite materials into consideration. In addition, the product of such processes is still prone to wrinkling and other imperfections. The use of tetrafluoroethylene as release film is known from Norton^{®} ETFE Fluoropolymer Film by Saint-Gobin performance Plastics, see also https://pronatindustries.com/wp-content/uploads/2015/03/ Norton-ETFE.pdf.

In view of the potential drawbacks of composite material processing, including processing time, part-to-part variation and product contamination, there still exists a need to develop faster, improved and more reliable assemblies and processes. It is also desirable to take rheological behavior and cure characteristics into account and, if possible, to provide a process which can take full advantage of existing equipment (e.g., metal stamps or presses).

Methods for shaping a composite material carrying out a double diaphragm mechanical thermoforming process has been successfully developed with a goal of providing an assembly for isolating a composite material from environmental contaminants as well as a molding process that not only addresses the disadvantages and shortcomings of other methods known in the art, but also takes into consideration the rheological behavior and cure characteristics of the composite material and also allows the potential for using existing infrastructure and equipment. This method provides an effective and efficient means for producing complex three-dimensional composite structures in an automated fashion. Thus, three-dimensional composite structures can be produced quickly, repeatedly and on a large-scale

For example, this is how this double diaphragm forming technology has evolved rapidly, making it possible to be use for full scale automotive production.

Composite volumes in the serial automotive market continue to grow due to an ever growing need for lightweighting of the different parts. Therefore, Original Equipment Manufacturers (OEMs) are increasingly turning to rate capable manufacturing technologies such as compression moulding to meet future rate and weight targets.

However, current solutions often fail to achieve both the required curing temperature range and surface quality of the component. As such, composite components, especially for visual or class A applications, require additional rework to meet the standards expected by the automotive industry

Methods using a double-diaphragm mechanical process implement diaphragm. In this context, the term "diaphragm" refers to any barrier that divides or separates two distinct physical areas. It also used the term "diaphragm structure" that refers to an assembly of one or more diaphragms that define an exterior space and an isolated interior space, *e.g.,* the area within a sealed pocket and the area outside of the sealed pocket. Generally, the material used to make the diaphragms is not particularly limited and can be, for example, rubbers, silicones, plastics, thermoplastics, or similar materials or can include a film selected from a plastic layer or an elastic layer. The diaphragms may be comprised of a single material or may include multiple materials, *e.g.*, arranged in layers.

Films used as diaphragm exist and comprise one or more layers. However, these films may have significant limitations and lower performances which may prevent their uses. Especially, these include limited both the curing temperature range (<150°C) and achievable surface quality of the component, and therefore, in particular cure speed for high volume manufacture, such as serial automotive or aerospace applications and an inability to capitalize on the rate capability of some rapid cure epoxy systems through high temperature curing (<190°C). For example, this can cause melting and/or failure of the film during forming of the composite component at a given T_{cure} comprises between about 150 and about 200°C.

Furthermore, certain release layer becomes soft when processed above its melt temperature increasing the likelihood of print through and/or orange peel effects on the cured part surface. Some unbalanced multi-layer composition of the film also gives rise to film curling during assembly, limiting process robustness and ease of use.

Moreover, multi-layers films are less easy to use. In particular, certain existing film having unbalanced multi-layer composition also gives rise to film curling during assembly, limiting process robustness and ease of use. Moreover, the use of multi-layers films limits the possibility of recycling these films or at least requires a more complex and expensive process to be set up.

Therefore, there still exists a need to have a film exhibiting extended temperature range to be used in high temperature double-diaphragm mechanical process for forming of structural composite components enables both higher temperature part curing (≤200°C), significantly reducing process takt times, whilst simultaneously improving part visual quality directly from the mould. The result is a reduction in overall part manufacturing cycles times and costs associated with intermittent rework and repair.

In addition to these requirements, one of the desired properties of these films is the ability of self-releasing. However, at high temperature, films can have the disadvantage of sticking to composite components, which can in particular lead to a degraded surface finish.

The present disclosure provides the use of a specific film in method using a double-diaphragm mechanical thermoforming process, for shaping composite materials - both individually and collectively - address these drawbacks.

Applicant discovered that the use of a single layer fluoropolymer film selected from ethylene tetrafluoroethylene (ETFE) film, as release film for high temperature double diaphragm forming (DDF) makes it possible to obtain complex structural composite components, and which can be employed over a wide temperature range and therefore used as a diaphragm. In addition, this ETFE film enables both higher temperature part curing, significantly reducing process takt times, whilst simultaneously improving part visual quality directly from the mould.

Furthermore, this fluoropolymer film selected from ETFE film has the advantage of being easily self-releasing that makes it possible to have no transfer and/or contamination from composite material to film and/or film to composite material following curing.

Accordingly, the present invention relates to the use of a single layer fluoropolymer film which is an ETFE film, as release film in a method for shaping a composite material as defined in claim 1.

The upper fluoropolymer film and the lower fluoropolymer film are an ETFE film.

According to the present invention, the ETFE film is self-releasing. That is, the film can easily release from the final molded composite part and/or the molded assembly can easily release from the tooling. This offers an undeniable advantage to protect tooling, including reduced tool wear and no requirement for mould sealer or release agent application between mouldings reducing touch labour and final part cost and therefore to facilitate the full scale composite structures production.

Typically, the ETFE film used in the present invention comprises at least about 99 wt%, in particular at least about 99.5 wt% of ethylene tetrafluoroethylene. This ETFE film may also comprise polymer additives as thermal or processing stabilizers, antistatic agent, lubricant, ...

According to the present invention, the ETFE film is used for high temperature double diaphragm forming (DDF) of complex composite structures using a press. This film has the advantage of being able to be used over a wide cure temperature range, namely a cure temperature T_{cure} ranges between about 120 and about 200°C, and especially between about 120 to about 170°C, in particular 120 to about 150°C corresponding to the specifications for the automotive market and the range from about 150 to about 190°C, in particular from about 160 to about 190°C, corresponding to the specifications for the aerospace and UAM markets..

Thus, the ETFE film used as release film in the present invention exhibits specific properties.

At the given cure temperature T_{cure} comprises between about 120 and about 200°C, the film is able to ensure no melting and/or failure and adequate release performance during forming the composite component. Therefore, in some embodiments, the ETFE film has a melt temperature no less than about 240°C. In some embodiments, in particular, the ETFE film has a melt temperature no less than about 240°C.

In some embodiments, the thickness (t) of the ETFE film, which depends on composite component geometry, ranges between about 10 microns and about 200 microns, in particular, between about 20 microns and about 150 microns. Preferably, the film has a thickness of between about 30 microns and about 100 microns. In some embodiments, in particular, the thickness (t) of the ETFE film ranges between about 30 microns and about 100 microns, preferably between about 50 microns and about 80 microns. This thickness makes it possible to obtain the desired mechanical performance of the film, prevent film wrinkling during preheating and failure during composite component forming.

In some embodiments, the ETFE film has an Elastic Modulus (E) in the range of about 300 to about 950 MPa, preferably of about 350 to about 900 MPa and has a Tensile Strength (σ) in the range of about 30 to about 90 MPa, preferably of about 35 to about 80 MPa. In some embodiments, in particular, the ETFE film an Elastic Modulus (E) in the range of about 500 to 900 MPa, preferably of about 550 to about 800 MPa and has a Tensile Strength (σ) in the range of about 45 to about 90 MPa, preferably of about 50 to about 65 MPa. This can help prevent film breakage during composite component forming.

To ensure the desired component geometry can be achieved without failure of the film during forming at a given T_{cure} comprises between about 120 and about 200°C, the film employed in the present invention has a specific elongation at break (ε). In some embodiments, the ETFE film exhibits an elongation at break (ε) in the range of about 400 to about 700%, in particular of about 450 to about 650% in either longitudinal or transverse directions at a rate of about 8 mm/s under ambient conditions, where typically the ambient temperature T_{ambient} being between about 20 and about 25 °C. In some embodiments, in particular, the ETFE film exhibits an elongation at break (ε) in the range of about 400 to about 700%, in particular of about 450 to about 600% in either longitudinal or transverse directions at a rate of about 8 mm/s, under ambient conditions.

In order not to limit the size of composite components, such film has a sufficiently large width. In some embodiments, the product width of the ETFE film is not less than about 1.2 m. Preferably, this product width is not less than about 1.5 m.

Thus, in a preferred embodiment, the ETFE film used according to the invention has:
- melt temperature (Tₘₑₗₜ) no less than about 240°C
- thickness (t) in the range of about 10 microns to about 200 microns, in particular of about 20 microns to about 150 microns, especially about 30 microns to about 100 microns,
- Elastic Modulus (E) in the range of about 300 to about 950 MPa, preferably of about 350 to about 900 MPa,
- Tensile Strength (σ) in the range of about 30 to about 90 MPa, preferably of about 35 to about 80 MPa, and
- elongation at break (ε) in the range of about 400 to about 700%, in particular of about 450 to about 650% in either longitudinal or transverse directions at a rate of about 8 mm/s, under ambient conditions.

In another preferred embodiment, the ETFE film used according to the invention has:
- melt temperature (Tₘₑₗₜ) no less than about 240°C,
- thickness (t) in the range of about 30 microns to about 100 microns, preferably 50 microns to about 80 microns,
- Elastic Modulus (E) in the range of about 500 to about 900 MPa, preferably of about 550 to about 800 MPa,
- Tensile Strength (σ) in the range of about 45 to about 90 MPa, preferably of about 50 to about 65 MPa, and
- elongation at break (ε) in the range of about 400 to about 700%, in particular of about 450 to about 600% in either longitudinal or transverse directions at a rate of about 8 mm/s, under ambient conditions.

The film thermal properties including melt temperature can be determined using Differential Scanning Calorimetry (DSC) in accordance with ASTM D3418, by using for example a Differential Scanning Calorimeter, such as TA Instruments Q2000.

The film mechanical properties including tensile strength, tensile modulus and elongation at break can be determined using Thin Film Tensile Strength & Elongation testing (ZM45) in accordance with ASTM D882-09, by using for example a Zwick Z250 test machine.

Typically, ETFE is a thermoplastic fluoropolymer that can be obtained by methods known in the art. For example, ETFE can be processed using standard thermoplastic processing methods such as injection molding, compression molding, blow molding, rotational molding, extrusion, and wire coating. Furthermore, for example, the ETFE film can be obtained by blow molding or extrusion lamination techniques.

According to an embodiment of the invention, the ETFE film can be recycled and reused in the method for shaping a composite material as claimed in the present invention. For example, once the used ETFE film is released from the final composite material, this film can be granulated and then extruded, typically with extruder known in the art, to obtain a new film that may be used in a method for shaping a composite material, especially in the method as described above.

As used herein, the term "substantially planar" refers to a material that has one plane that is measurably larger than the other two planes (for example, at least 2, 3, 4 or 5 times larger, or more). In some embodiments, the substantially planar material has thickness variation along the largest plane. For example, the composite material may include reinforcement materials such as pad-ups (i.e., localized increases in the quantity of plies) or ply drops (i.e., localized decreases in the quantity of plies), material changes, and/or areas where the composite transitions, *e.g.*, to fabric. In other embodiments, the substantially planar material exhibits minimal thickness variation along the area of the composite material. For example, the term substantially planar can mean that the composite material has a global thickness variation of no greater than +/- 15% over 90% of the area. In some embodiments, the thickness variation is no greater than +/-10% over 90% of the area. Substantially planar is not intended to denote a perfectly flat material, but also includes materials that have slight variations in concavity and/or convexity.

In the context of the present invention, the method for shaping a composite material uses a framed assembly. The method includes the use of a framed assembly. The upper film and the lower film are held together by a structural frame comprising a top frame, a center frame and a bottom frame wherein:
the lower film is held between the bottom frame and the center frame; and
the upper film is held between the center frame and the top frame.

In a preferred embodiment, the method includes the use of a framed assembly.

In certain embodiments, the pocket housing the composite material is defined by a structural frame which houses the composite material held between the films. In certain embodiments, the substantially planar composite material is placed between an upper film and a lower film. This creates a pocket between the films which houses the composite material. For example, the lower film having a top surface and a bottom surface can be placed such that its bottom surface contacts the top of the perimeter of the bottom frame. The composite material can be subsequently laid on top of the lower film; a central frame can then be placed on the top surface of the lower film, followed by the upper film and finally a top frame against the upper film. This arrangement forms a pocket between the lower and upper films which houses the composite material. In some embodiments, the central frame may be excluded. The top, central (where present) and bottom frames defines a perimeter which maintains the shape of the fluoropolymer films according to the invention, *e.g.*, by the positioning of clamps or other fastening means at predetermined intervals around the perimeter. Such top, central and bottom frames can be manufactured based on the size and shape of the composite material to be molded. Optionally, pre-manufactured structural support frames are known in the art for use with conventional metal or composite press tools *(e.g.,* from manufacturers such as Langzauner or Schubert).

In some embodiments the central frame may include a means for removing air, for example a vacuum inlet or other valve. The vacuum inlet, if present, is connected to a vacuum source (*e.g.* a vacuum pump). In some embodiments, the pocket that houses the composite may be a sealed pocket, *e.g.,* an airtight sealed pocket, whereby the structural frame is disposed about the entire periphery of the composite material and impede air or contaminants from entering the pocket.

The upper film and the lower film are brought into intimate contact with the composite material, to form a layered structure. This may be accomplished for example by applying vacuum pressure between the upper film and lower film. In other embodiments, this may be accomplished by physically applying pressure (*e.g.*, by hand or by mechanical means) on the upper and/or lower film(s) to remove air. Vacuum pressure may be desired in certain cases, *e.g.,* to extract the majority of residual air which may hinder molding performance, thus minimizing deformation or wrinkling of the composite material (or its components) or film. The vacuum also prevents film wrinkling and adds stability to the entire assembly. The use of vacuum pressure may also aid in maintaining fiber alignment, provide support to the materials during the process and during shaping, and/or to maintain desired thickness at elevated temperatures. The term "vacuum pressure" as used herein refers to vacuum pressures of less than 1 atmosphere (or less than 1013 mbar). In some embodiments, the vacuum pressure between the films is set to less than about 1 atmosphere, less than about 800 mbar, less than about 700 mbar, or less than about 600 mbar. In some embodiments, the vacuum pressure between the films is set to about 670 mbar. At this point, whether by vacuum or by other means, such as for example mechanical means, the composite material is firmly held between the films, such that it is stationary until the application of heat and/or force. Such stationary layered structure can be advantageous, for example, because the composite material held within the layered structure is not only maintained stationary in its location with sufficient tension across its X and Y axes, but it is also indexed. That is to say, the composite material may be placed (*e.g.,* by automated means) in a specific position between the films within the stationary layered structure. This indexed stationary layered structure may then be placed (*e.g.,* by automated means) in a specific position in the press tool (as described in more detail herein below), such that the press tool consistently engages a predetermined area of the composite material. A stationary layered structure may, therefore, be reliably used to produce multiple copies of a molded product without the need to index each composite material blank individually.

In some embodiments, the composite material can be machined according to a pattern prior to step (a).

The layered structure may, in some cases, be pre-heated in a heating apparatus. The layered structure can be placed in the heating apparatus manually or by automated means, *e.g.,* using an automated shuttle. This heating apparatus can be any heater that can be used in the formation or molding of metal or composite material products, for example, a contact heater or a non-contact heater (*i.e.* ceramic or an infrared (IR) heater). In some cases this pre-heating softens the upper film and the lower film, *e.g.,* so that they are more pliable during formation of the final molded product. In some cases, this pre-heating brings the composite material held within the layered structure to a desired viscosity or temperature to allow complex shapes to be formed from a flat initial layup. Pre-heating may occur in a heating apparatus heated to a temperature of above about 75°C, 100°C, 125°C, 150°C, 175°C, 190°C. This temperature can be adjusted, for example, depending upon the identity of components in the composite material. Such pre-heating is advantageous, for example, if it is desired to minimize heating of the press tool and/or to minimize the amount of time that the layered structure resides within the press tool.

In order to form the final molded product, the layered structure is positioned in a press tool. In some embodiments, no vacuum pressure is applied to any portion of the press tool. In other embodiments, localized vacuum is applied to the tool surface, for example to remove entrapped air between the layered structure and the tool. In such embodiments, however, the vacuum is typically not used as a force to form the shape of the final molded product. The layered structure can be placed in the press tool manually or by automated means, *e.g.*, using an automated shuttle. This press tool generally includes a male mold and a female mold, which are separated by a gap. Each mold has a non-planar molding surface. In some embodiments, a mold release agent may be added to the male mold, the female mold, or both. Such mold release agent may be helpful, *e.g.,* for removing the shaped part from the mold while still at temperatures above ambient temperature. In some embodiments, mold release agent is not required. The molding surfaces are fixed, *i.e.,* not reconfigurable. The molding surfaces are also typically matched, *i.e.,* the male mold corresponding approximately to the opposite of the female mold; and in some embodiments may be perfectly matched. However, in some embodiments, the male and female molds are such that, when closed, the thickness between them varies. In certain embodiments, the layered structure is positioned in the gap at a specific, predetermined distance between the male mold and the female mold.

The layered structure is then compressed between the male mold and the female mold, by closing the gap between the molds (step (e)). In some embodiments, this is accomplished by partially closing the gap between the male mold and the female mold to form a smaller gap between the molds. This smaller gap is subsequently closed after a specific time or viscosity is reached. It is understood that "closing the gap" refers to compressing the molds such that a pre-determined final cavity thickness along the Z axis is obtained between them. Final cavity thickness can be adjusted, *e.g.*, by controlling where the molds stop in relation to each other, and the choice of thickness can be made by the operator of the molds and will depend on the nature of the final molded product. In some embodiments, the final cavity thickness is substantially uniform, *i.e.,* the process produces a two-sided molded final product with a thickness that varies by less than 5%. In some embodiments, the process produces a final molded product with a thickness that varies by less than about 4%, *e.g.,* less than about 3%, less than about 2% or even less than about 1%. In other embodiments, the male and female tools may be configured to provide a cavity thickness that purposely varies across the X and Y axes.

In certain embodiments, the male mold and the female mold are maintained at a temperature above ambient temperature. For example, they may be maintained at a temperature of above about 75°C, 100°C, 125°C, 150°C, 175°C, 200°C or even higher, in particular, for example at a temperature between about 120 and about 200°C. This temperature can be adjusted depending upon the identity (and the viscosity and reactivity) of the components in the composite material. The molds, for example, can be maintained at a temperature above the softening point of the binder or matrix material used in the composite material. In some embodiments, the composite material comprises a thermoset material and molds are maintained at temperatures between about 100°C and 200°C. The binder or matrix material in the composite material is in a solid phase at ambient temperature (20°C-25°C), but will soften upon heating. This softening allows molding of the composite material in the press tool and the conformance of the flat preform to the final component shape.

In some embodiments, the male mold and the female mold are maintained in a closed position for a predetermined time to form a shaped structure. For example, in some embodiments, the molds are heated and maintained in a closed position until a desired viscosity or temperature is reached. In some embodiments, the molds are maintained in a closed position until the viscosity of the composite material is less than about 1.0 x 10⁸ m Pa. In some embodiments, the molds are heated and maintained in a closed position until the binder or matrix material begins to cross-link. In other embodiments, the molds are not heated, but are maintained in a closed position for a period of time sufficient for the material to maintain a molded shape. Molds may be maintained in a closed position1 minute and about 60 minutes, for example, for between about 5 and about 20 minutes or for example, for between about 1 and about 10 minutes,. The length of time that the molds are maintained in a closed position will depend upon a number of factors, including the identity of the composite material and the temperature of the molds.

In certain embodiments, the male mold is driven through the layered structure, while the female mold remains static. In other certain embodiments, the female mold is driven through the layered structure, while the male mold remains static. In other embodiments, the female mold does not remain static, but moves at a rate that is slower than the male mold (such that the male mold still acts predominantly as the forming surface). In still other embodiments, both molds move at approximately the same rate of speed to close the gap between the molds. The molds are driven at a rate and to a final pressure sufficient to deform/mold the composite material to the desired shape. For example, the molds may be driven at a rate of between about 0.4 mm/s and about 500 mm/s, *e.g.*, between about 0.7 mm/s and about 400 mm/s, especially between about 1 mm/s and about 350 mm/s, for example between 5 mm/s and 350 mm/ or between about 50 mm/s and 300 mm/s. Additionally, the molds may be driven to a final pressure of between about 30 psi and about 1000 psi, in particular between about 100 psi and about 800 psi, or between about 250 psi and about 750 psi. In some embodiments, the molds are driven at a rate and to a final pressure that have been selected to control the thickness of the final molded product while avoiding the formation of wrinkles and the distortion of structural fibers. In addition, the molds may be driven at a rate and to a final pressure that have been selected to allow the rapid formation of final molded parts.

The gap between the male mold and the female mold is then opened. The shaped structure may be cooled to below the glass transition temperature of the binder or matrix material while the shaped structure remains on the press tool. However, in some embodiments, the shaped structure is removed from the press tool before it cools to below the glass transition temperature of the binder or matrix material. The shaped structure is all the more easily removed from the press tool thanks to the use of the fluoropolymer release film of the present invention. When the binder or matrix material cools to below its glass transition temperature, the binder or matrix material returns to a solid phase and the composite material retains its newly formed geometry. If the composite material is a preform, such preform will hold its desired shape for subsequent resin infusion.

Once the shaped structure is obtained, the clips and/or fastenings are undone and the different frames are removed from the films. Then, the films and cure composite part are removed and the films are released from the cured composite component.

According to the present invention, the ETFE film is self-releasing. Thus, the films can then easily release from the final molded part in order to obtain excellent visual surface finish of the cured composite part following curing, with no signs of surface porosity or weave distortion while simultaneously limiting fabric print through and orange peel effects as much as is reasonably practicable

Moreover, if desired the film can be temporarily maintained on the final molded product. For example, a temporary film may be desired, *e.g.,* to protect the component from the environment including contamination prior to further processing i.e. finishing/painting, etc...

As used herein, the term "composite material" refers to an assembly of structural fibers and a binder or matrix material. Structural fibers may be organic fibers, inorganic fibers or mixtures thereof, including for example commercially available structural fibers such as carbon fibers, glass fibers, aramid fibers (*e.g.*, Kevlar), high-modulus polyethylene (PE) fibers, polyester fibers, poly-p-phenylene-benzobisoxazole (PBO) fibers, quartz fibers, alumina fibers, zirconia fibers, silicon carbide fibers, other ceramic fibers, basalt, natural fibers and mixtures thereof. It is noted that end uses that require high-strength composite structures would typically employ fibers having a high tensile strength (*e.g.,* ≥3500 MPa or ≥500 ksi). Such structural fibers may include one or multiple layers of fibrous material in any conventional configuration, including for example, unidirectional tape (uni-tape) webs, non-woven mats or veils, woven fabrics, knitted fabrics, non-crimped fabrics, fiber tows and combinations thereof. It is to be understood that structural fibers may be included as one or multiple plies across all or a portion of the composite material, or in the form of pad-ups or ply drops, with localised increases/decreases in thickness.

The fibrous material is held in place and stabilized by a binder or matrix material, such that alignment of the fibrous material is maintained and the stabilized material can stored, transported and handled (*e.g.*, shaped or otherwise deformed) without fraying, unraveling, pulling apart, buckling, wrinkling or otherwise reducing the integrity of the fibrous material. Fibrous materials held by a small amount of binder (*e.g.*, typically less than about 10% by weight) are typically referred to as fibrous preforms. Such preforms would be suitable for resin infusion applications, such as RTM. Fibrous materials may also be held by larger amounts of matrix materials (generally called "prepregs" when referring to fibers impregnated with a matrix), and would thus be suitable for final product formation without further addition of resin. In certain embodiments, the binder or matrix material is present in the composite material in an amount of at least about 30%, at least about 45%, at least about 40%, or at least about 45%.

The binder or matrix material is generally selected from thermoplastic polymers, thermoset resins, and combinations thereof. When used to form a preform, such thermoplastic polymers and thermoset resins may be introduced in various forms, such as powder, spray, liquid, paste, film, fibers, and non-woven veils. Means for utilizing these various forms are generally known in the art.

Thermoplastic materials include, for example, polyesters, polyamides, polyimides, polycarbonates, poly(methyl methacrylates), polyaromatics, polyesteramides, polyamideimides, polyetherimides, polyaramides, polyarylates, polyaryletherketones, polyetheretherketones, polyetherketoneketones, polyacrylates, poly(ester) carbonates, poly(methyl methacrylates/butyl acrylates), polysulphones, polyarylsulphones, copolymers thereof and combinations thereof. In some embodiments, the thermoplastic material may also include one or more reactive end groups, such as amine or hydroxyl groups, which are reactive to epoxides or curing agents.

Thermoset materials include, for example, epoxy resins, bismaleimide resins, formaldehyde-condensate resins (including formaldehyde-phenol resins), cyanate resins, isocyanate resins, phenolic resins and mixtures thereof. The epoxy resin may be mono or poly-glycidyl derivative of one or more compounds selected from the group consisting of aromatic diamines, aromatic monoprimary amines, aminophenols, polyhydric phenols, polyhydric alcohols, and polycarboxylic acids. The epoxy resins may also be multifunctional (*e.g.*, di-functional, tri-functional, and tetra-functional epoxies).

In some embodiments, a combination of thermoplastic polymer(s) and thermoset resin(s) are used in the composite material. For example, certain combinations may operate with synergistic effect concerning flow control and flexibility. In such combinations, the thermoplastic polymers would provide flow control and flexibility to the blend, dominating the typically low viscosity, brittle thermoset resins.

The use of the specific fluoropolymer film described above not only aids in the molding of composite materials *e.g.*, by maintaining the composite material in a stationary position with sufficient tension across its X and Y axes, but also provides significant additional functional advantages. For example, the arrangement protects the composite material blank from environmental contaminants, such as impurities in the air or on the tooling machinery. This protection enables the (otherwise unmanageable) use of conventional press tools, for the processing of two dimensional preforms to three dimensional complex shapes, and thus that are capable of significantly more complex three dimensional geometries than either vacuum formation or reconfigurable tool technologies. Furthermore, the use of the double-diaphragm arrangement can allow the mold release process to be eliminated from the total process.

The double diaphragm mechanical thermoforming process described herein, therefore, provides an effective and efficient means for producing complex three-dimensional composite structures from two dimensional flat preforms in an automated fashion, and this for both the automotive, UAM and aerospace markets. Three-dimensional composite structures can be produced quickly, repeatedly and on a large-scale. For example, three-dimensional composite structures can be formed from substantially planar composite material blanks in 1-10 minute cycles or in 5-20 minute, or 10-30 minute cycles, or 20-60 minute cycles depending on desired parts and the identity of the composite material. Such quick, repeatable processes are suitable for the manufacture of automotive parts and paneling, such as hoods, trunks, door panels, fenders and wheel wells.

### EXAMPLE

The following example is for illustration purposes only, and is not to be construed as limiting the scope of the appended claims.

### Example 1: Double Diaphragm Mechanical Thermoforming, Framed, using a high temperature ETFE film and rapid cure automotive epoxy prepreg

A lower flexible diaphragm made of a 52 micron ETFE film was positioned onto a bed holding a bottom frame. This film exhibits characteristics reported in table 1.

**Table 1 - Measures of mechanical properties in machine direction (MD) and transverse direction (TD)**

| | |
|---|---|
| Temperature resistance (°C) | 240-250 |
| Melting point (°C) | 267 |
| Elastic Modulus (E) (MPa) | 765 (MD) |
| | 783 (TD) |
| Tensile Strength (σ) (MPa) | 59.8 (MD) |
| | 56.5 (TD) |
| elongation at break (ε) (%) | 466 (MD) |
| | 526 (TD) |
| thickness (t) (µm) | 52 |

A composite material blank comprising of a carbon-fiber reinforced epoxy (Solvay, formerly Cytec Industries, MTM58B) and surfacing film (Solvay, formerly Cytec Industries, VTF266) was laid on top of the lower flexible diaphragm, followed by a center frame having a vacuum inlet. An upper flexible diaphragm made of the same film as the lower flexible diaphragm was then placed such that it covered the center frame and composite material blank. The top, center and bottom frames were clamped together, thereby creating a vacuum tight seal and a sealed pocket bounded by the lower flexible diaphragm, the upper flexible diaphragm and the center frame. A vacuum was then applied to remove air from between the upper flexible diaphragm and the lower flexible diaphragm, until the vacuum pressure reached minimum of 670 mbar. At that point, the composite material blank was firmly supported by both diaphragms, creating a stationary layered structure.

The layered structure was then shuttled into ceramic non-contact heating apparatus, where it was heated to 140°C. Once the external film temperature reached a minimum of 120°C, it was shuttled into a press tool comprising a matched male mold and female mold, configured in the shape of a structural automotive Class-A demonstrator component. The female mold was then driven toward the male mold at a rate of approximately 4 mm/s (250 mm/s). The male mold remained stationary, and both molds were held at 150°C until cross linking had begun. The shaped structure was removed from the press tool while still hot and allowed to cool after removal. The process for shaping the composite material blank was 15 minutes from start to finish (i.e., first placement of the lower flexible diaphragm to establishment of final shape).

Following demoulding and cooling, the part manufactured using a 52 micron ETFE top film was visually inspected and scanned using short and long wave scanning techniques (Visuol) to identify the level of orange peel (fine) and fabric print through (coarse) respectively. From the results, it is apparent that the increased thermal performance and film stiffness of the ETFE top film enabled an important reduction in the measured print through and orange peel.

The thermal properties of the film were determined using a Differential Scanning Calorimetry (DSC) using a TA Q2000 DSC machine) with respect to ASTM 3418. A heat/cool/heat procedure was applied screening a temperature range from -30 °C to 300 °C with a cooling and heating rate of 10°C/min.

The mechanical properties of the film were determined in accordance with ASTM D882-09 using a Zwick Z250 test machine. The film was tested in both machine and transverse directions at a test speed of about 8 mm/s (500 mm/min) under ambient conditions of 23°C and 50% relative humidity.

## Claims

1. Use of a single layer ethylene tetrafluoroethylene film, as release film in a method for shaping a composite material, wherein the method is **characterized by** comprising:
(a) placing a substantially planar composite material between an upper ethylene tetrafluoroethylene film and a lower ethylene tetrafluoroethylene film by creating a pocket between the films which houses the composite material,
(b) bringing the upper ethylene tetrafluoroethylene film and the lower ethylene tetrafluoroethylene film into intimate contact with the composite material, thereby forming a layered structure, wherein the composite material is held stationary between the upper ethylene tetrafluoroethylene film and the lower ethylene tetrafluoroethylene film until heat or force is applied to the layered structure;
(c) optionally pre-heating the layered structure in a heating apparatus at a temperature sufficient to either lower the viscosity of the composite material or soften the films;
(d) positioning the layered structure in a press tool comprising a male mold and a corresponding female mold separated by a gap, wherein the male mold and the female mold each independently have a non-planar molding surface,
(e) compressing the layered structure between the male mold and the female mold by closing the gap between the male mold and the female mold; and
(f) maintaining the male mold and the female mold in a closed position until the viscosity of the layered structure reaches a level sufficient to maintain a molded shape;
wherein the upper film and the lower film are held together by a structural frame comprising a top frame, a center frame and a bottom frame, wherein: the lower film is held between the bottom frame and the center frame; and the upper film is held between the center frame and the top frame.

2. The use of claim 1, wherein the ethylene tetrafluoroethylene film has
- melt temperature (Tₘₑₗₜ) no less than about 240°C,
- thickness (t) in the range of about 30 microns to about 100 microns, preferably 50 microns to about 80 microns,
- Elastic Modulus (E) in the range of about 500 to about 900 MPa, preferably of about 550 to about 800 MPa,
- Tensile Strength (σ) in the range of about 45 to about 90 MPa, preferably of about 50 to about 65 MPa, and
- elongation at break (ε) in the range of about 400 to about 700%, in particular of about 450 to about 600% in either longitudinal or transverse directions at a rate of about 8 mm/s, under ambient conditions.

3. The use of any one of claims 1 to 2, wherein step (e) comprises partially closing the gap between the male mold and the female mold such that a smaller gap is formed between the molds, which smaller gap is subsequently closed after a specific time or viscosity is reached.

4. The use of any one of claims 1 to 3, wherein the male mold and the female mold are maintained at a temperature above ambient temperature.

5. The use of claim 4, wherein the male mold and the female mold are maintained at a temperature above 100°C.

6. The use of any one of claims 1 to 5, wherein step (e) comprises closing the gap between the male mold and the female mold at a speed of between about 0.7 mm/s and about 400 mm/s, while maintaining the male mold and the female mold at a temperature above the softening point of the composite material.

7. The use of claim 6, wherein the center frame supplies a source of vacuum to the assembly.

8. The use of any one of claims 1 to 7, wherein the upper film and the lower film are held together by a structural frame comprising a top frame and a bottom frame, wherein both the lower film and the upper film are held between the bottom frame and the top frame.

9. The use of any one of claims 1 to 8, wherein the layered structure is positioned in the press tool and in the optional heating apparatus by automated means.

10. The use of any one of claims 1 to 9, wherein the composite material comprises structural fibers of a material selected from aramid, high-modulus polyethylene (PE), polyester, poly-p-phenylene-benzobisoxazole (PBO), carbon, glass, quartz, alumina, zirconia, silicon carbide, basalt, natural fibers and combinations thereof.

11. The use of any one of claims 1 to 10, wherein the composite material comprises a binder or matrix material selected from thermoplastic polymers, thermoset resins, and combinations thereof.

## Patentansprüche

1. Verwendung einer einschichtigen Ethylentetrafluorethylenfolie als Trennfolie in einem Verfahren zum Formen eines Verbundmaterials, wobei das Verfahren **dadurch gekennzeichnet ist, dass** es Folgendes umfasst:
(a) Platzieren eines im Wesentlichen planaren Verbundmaterials zwischen einer oberen Ethylentetrafluorethylenfolie und einer unteren Ethylentetrafluorethylenfolie durch Erzeugen einer Tasche zwischen den Folien, die das Verbundmaterial aufnimmt,
(b) Bringen der oberen Ethylentetrafluorethylenfolie und der unteren Ethylentetrafluorethylenfolie in engen Kontakt mit dem Verbundmaterial, dadurch Bilden einer Schichtstruktur, wobei das Verbundmaterial zwischen der oberen Ethylentetrafluorethylenfolie und der unteren Ethylentetrafluorethylenfolie stationär gehalten wird, bis Wärme oder Kraft auf die Schichtstruktur aufgebracht wird;
(c) optional Vorwärmen der Schichtstruktur in einer Heizvorrichtung bei einer Temperatur, die ausreicht, um entweder die Viskosität des Verbundmaterials zu verringern oder die Folien zu erweichen;
(d) Positionieren der Schichtstruktur in einem Presswerkzeug, das eine männliche Form und eine entsprechende weibliche Form umfasst, die durch einen Spalt getrennt sind, wobei die männliche Form und die weibliche Form jeweils unabhängig eine nicht planare Formoberfläche aufweisen,
(e) Komprimieren der Schichtstruktur zwischen der männlichen Form und der weiblichen Form durch Schließen des Spalts zwischen der männlichen Form und der weiblichen Form; und
(f) Halten der männlichen Form und der weiblichen Form in einer geschlossenen Position, bis die Viskosität der Schichtstruktur ein Niveau erreicht, das ausreicht, um eine geformte Form beizubehalten;
wobei die obere Folie und die untere Folie durch einen Strukturrahmen zusammengehalten werden, der einen oberen Rahmen, einen mittleren Rahmen und einen unteren Rahmen umfasst, wobei:
die untere Folie zwischen dem unteren Rahmen und dem mittleren Rahmen gehalten wird; und
die obere Folie zwischen dem mittleren Rahmen und dem oberen Rahmen gehalten wird.

2. Verwendung nach Anspruch 1, wobei die Ethylentetrafluorethylenfolie Folgendes aufweist
- eine Schmelztemperatur (Tₘₑₗₜ) von nicht weniger als etwa 240 °C,
- eine Dicke (t) im Bereich von etwa 30 Mikrometer bis etwa 100 Mikrometer, vorzugsweise 50 Mikrometer bis etwa 80 Mikrometer,
- einen Elastizitätsmodul (E) im Bereich von etwa 500 bis etwa 900 MPa, vorzugsweise von etwa 550 bis etwa 800 MPa,
- eine Zugfestigkeit (σ) im Bereich von etwa 45 bis etwa 90 MPa, vorzugsweise von etwa 50 bis etwa 65 MPa, und
- eine Bruchdehnung (ε) im Bereich von etwa 400 bis etwa 700 %, insbesondere von etwa 450 bis etwa 600 % in Längs- oder Querrichtung bei einer Rate von etwa 8 mm/s unter Umgebungsbedingungen.

3. Verwendung nach einem der Ansprüche 1 bis 2, wobei Schritt (e) teilweises Schließen des Spalts zwischen der männlichen Form und der weiblichen Form, so dass ein kleinerer Spalt zwischen den Formen gebildet wird, umfasst, wobei der kleinere Spalt anschließend nach Erreichen einer bestimmten Zeit oder Viskosität geschlossen wird.

4. Verwendung nach einem der Ansprüche 1 bis 3, wobei die männliche Form und die weibliche Form auf einer Temperatur über Umgebungstemperatur gehalten werden.

5. Verwendung nach Anspruch 4, wobei die männliche Form und die weibliche Form auf einer Temperatur über 100 °C gehalten werden.

6. Verwendung nach einem der Ansprüche 1 bis 5, wobei Schritt (e) Schließen des Spalts zwischen der männlichen Form und der weiblichen Form bei einer Geschwindigkeit zwischen etwa 0,7 mm/s und etwa 400 mm/s, während die männliche Form und die weibliche Form auf einer Temperatur über dem Erweichungspunkt des Verbundmaterials gehalten werden, umfasst.

7. Verwendung nach Anspruch 6, wobei der mittlere Rahmen der Anordnung eine Vakuumquelle bereitstellt.

8. Verwendung nach einem der Ansprüche 1 bis 7, wobei die obere Folie und die untere Folie durch einen Strukturrahmen zusammengehalten werden, der einen oberen Rahmen und einen unteren Rahmen umfasst, wobei sowohl die untere Folie als auch die obere Folie zwischen dem unteren Rahmen und dem oberen Rahmen gehalten werden.

9. Verwendung nach einem der Ansprüche 1 bis 8, wobei die Schichtstruktur durch automatisierte Mittel in dem Presswerkzeug und in der optionalen Heizvorrichtung positioniert wird.

10. Verwendung nach einem der Ansprüche 1 bis 9, wobei das Verbundmaterial Strukturfasern eines Materials umfasst, das aus Aramid, hochmoduligem Polyethylen (PE), Polyester, Poly-p-phenylen-benzobisoxazol (PBO), Kohlenstoff, Glas, Quarz, Aluminiumoxid, Zirkoniumdioxid, Siliciumcarbid, Basalt, Naturfasern und Kombinationen daraus ausgewählt ist.

11. Verwendung nach einem der Ansprüche 1 bis 10, wobei das Verbundmaterial ein Binde- oder Matrixmaterial umfasst, das aus thermoplastischen Polymeren, duroplastischen Harzen und Kombinationen daraus ausgewählt ist.

## Revendications

1. Utilisation d'un film d'éthylène tétrafluoroéthylène monocouche, en tant que film antiadhésif dans un procédé de mise en forme d'un matériau composite, le procédé étant **caractérisé en ce qu'**il comprend :
(a) le placement d'un matériau composite sensiblement plan entre un film d'éthylène tétrafluoroéthylène supérieur et un film d'éthylène tétrafluoroéthylène inférieur en créant une poche entre les films qui loge le matériau composite,
(b) le fait d'amener le film d'éthylène tétrafluoroéthylène supérieur et le film d'éthylène tétrafluoroéthylène inférieur en contact intime avec le matériau composite, formant ainsi une structure en couche, le matériau composite étant maintenu fixe entre le film d'éthylène tétrafluoroéthylène supérieur et le film d'éthylène tétrafluoroéthylène inférieur jusqu'à ce que de la chaleur ou une force soit appliquée à la structure en couche ;
(c) éventuellement, le préchauffage de la structure en couches dans un appareil de chauffage à une température suffisante pour soit abaisser la viscosité du matériau composite, soit ramollir les films ;
(d) le positionnement de la structure en couches dans un outil de presse comprenant un moule mâle et un moule femelle correspondant séparés par un espace, le moule mâle et le moule femelle ayant chacun indépendamment une surface de moulage non plane,
(e) la compression de la structure en couches entre le moule mâle et le moule femelle en fermant l'espace entre le moule mâle et le moule femelle ; et
(f) le maintien du moule mâle et du moule femelle en position fermée jusqu'à ce que la viscosité de la structure en couches atteigne un niveau suffisant pour maintenir une forme moulée ;
le film supérieur et le film inférieur étant maintenus ensemble par un cadre structurel comprenant un cadre supérieur, un cadre central et un cadre inférieur,
le film inférieur étant maintenu entre le cadre inférieur et le cadre central ; et
le film supérieur étant maintenu entre le cadre central et le cadre supérieur.

2. Utilisation selon la revendication 1, le film d'éthylène tétrafluoroéthylène ayant
- une température de fusion (Tₘₑₗₜ) supérieur à environ 240 °C,
- une épaisseur (t) comprise dans la plage d'environ 30 microns à environ 100 microns, de préférence 50 microns à environ 80 microns,
- un Module élastique (E) dans la plage d'environ 500 à environ 900 MPa, de préférence d'environ 550 à environ 800 MPa,
- une Résistance à la rupture (σ) dans la plage d'environ 45 à environ 90 MPa, de préférence d'environ 50 à environ 65 MPa et
- un allongement à la rupture (ε) compris dans la plage d'environ 400 à environ 700 %, en particulier d'environ 450 à environ 600 %, dans les directions longitudinale ou transversale, à une vitesse d'environ 8 mm/s, dans les conditions ambiantes.

3. Utilisation selon l'une quelconque des revendications 1 et 2, l'étape (e) comprenant la fermeture partielle de l'espace entre le moule mâle et le moule femelle de sorte qu'un espace plus petit est formé entre les moules, lequel espace plus petit étant ensuite fermé après qu'un temps spécifique ou une viscosité spécifique est atteint.

4. Utilisation selon l'une quelconque des revendications 1 à 3, le moule mâle et le moule femelle étant maintenus à une température supérieure à la température ambiante.

5. Utilisation selon la revendication 4, le moule mâle et le moule femelle étant maintenus à une température supérieure à 100 °C.

6. Utilisation selon l'une quelconque des revendications 1 à 5, l'étape (e) comprenant la fermeture de l'espace entre le moule mâle et le moule femelle à une vitesse comprise entre environ 0,7 mm/s et environ 400 mm/s, tout en maintenant le moule mâle et le moule femelle à une température supérieure au point de ramollissement du matériau composite.

7. Utilisation selon la revendication 6, le cadre central fournissant une source de vide à l'ensemble.

8. Utilisation selon l'une quelconque des revendications 1 à 7, le film supérieur et le film inférieur étant maintenus ensemble par un cadre structurel comprenant un cadre supérieur et un cadre inférieur, à la fois le film inférieur et le film supérieur étant maintenus entre le cadre inférieur et le cadre supérieur.

9. Utilisation selon l'une quelconque des revendications 1 à 8, la structure en couche étant positionnée dans l'outil de presse et dans l'appareil de chauffage facultatif par des moyens automatisés.

10. Utilisation selon l'une quelconque des revendications 1 à 9, le matériau composite comprenant des fibres structurales d'un matériau choisi parmi l'aramide, le polyéthylène (PE) à haut module, le polyester, le poly-p-phénylène-benzobisoxazole (PBO), le carbone, le verre, le quartz, l'alumine, le zircone, le carbure de silicium, le basalte, les fibres naturelles et leurs combinaisons.

11. Utilisation selon l'une quelconque des revendications 1 à 10, le matériau composite comprenant un liant ou un matériau de matrice choisi parmi des polymères thermoplastiques, des résines thermodurcissables, et des combinaisons de ceux-ci.
